# FASCICULE DE BREVET EUROPEEN

(11) **EP 2 535 226 B1**
(45) Date de publication et mention de la délivrance du brevet: **22.05.2019**
(21) Numéro de dépôt: 12305624.4
(22) Date de dépôt: 04.06.2012
(51) Int. Cl.: B60R 19/50, B62D 25/24

(54) **Enjoliveur et bouclier permettant un accès à une ampoule de dispositif d'éclairage ou de signalisation de véhicule automobile**
Zierblende und Schutzverkleidung, die den Zugriff zu einer Birne einer Beleuchtungs- oder Signalisierungsvorrichtung eines Kraftfahrzeugs ermöglichen
Trim and shield providing access to a bulb of a lighting or signalling device of an automobile

(30) Priorité: 17.06.2011 FR 1155308
(43) Date de publication de la demande: 19.12.2012
(73) Titulaire: Renault S.A.S., 92100 Boulogne-Billancourt (FR)
(72) Inventeur: Vollet, M. Raphael, 91340 Ollainville (FR)

(56) Documents cités:
- EP-A2- 0 969 171
- FR-A1- 2 743 345
- FR-A1- 2 863 971
- FR-A1- 2 900 626

## Description

### Domaine technique de l'invention

L'invention concerne l'accès à une ampoule d'un dispositif d'éclairage ou de signalisation de véhicule automobile, également désigné par les termes de "bloc optique" et/ou feu de signalisation (feu avant ou arrière, feu stop, feu indicateur de changement de direction).

L'invention a trait plus particulièrement à un agencement permettant un accès aisé à une ampoule d'un dispositif d'éclairage ou de signalisation de véhicule automobile, notamment en vue de son remplacement.

### État de la technique

Selon l'architecture de beaucoup de véhicules actuels, l'accès à une ampoule d'un dispositif d'éclairage ou de signalisation, pour son remplacement par exemple, nécessite fréquemment un accès au dispositif en vue de son démontage par un côté arrière du bouclier. Il est alors nécessaire soit de déposer le bouclier, soit de soulever le capot puis d'accéder au dispositif par le dessus du compartiment moteur.

Pour s'affranchir de ces contraintes, le document FR-A1-286971 décrit un agencement d'une trappe d'accès aux ampoules d'un projecteur de véhicule automobile, comportant un capot et une calandre munie d'au moins une grille fermant une cavité de la calandre localisée au voisinage du projecteur. Cette trappe est constituée par la grille maintenue en position de fermeture par un verrouillage accessible uniquement lorsque le capot est ouvert. Il est donc nécessaire de prévoir une manipulation du verrouillage par l'intérieur du compartiment moteur, ce qui est particulièrement contraignant, voire parfois impossible à concevoir.

Une autre solution consiste à prévoir un enjoliveur extérieur qui peut être monté et démonté sur le boulier dans une configuration adjacente à la glace du dispositif d'éclairage ou de signalisation. Le démontage d'un tel enjoliveur a pour fonction de donner accès, depuis un côté extérieur du bouclier, à une cavité localisée au voisinage du dispositif et fermée par l'enjoliveur lorsqu'il est fixé sur le bouclier. Une solution connue pour la fixation réversible de l'enjoliveur consiste en un moyen de clipsage de l'enjoliveur sur le bouclier. Un tel enjoliveur est encombrant et d'esthétique perfectible. Si le montage de l'enjoliveur est aisé par enfichage depuis le côté extérieur du bouclier dans une ouverture du bouclier, son démontage, lorsqu'il est possible, est particulièrement délicat. Les seules possibilités sont soit de venir actionner manuellement ou par un outil dédié, depuis le côté intérieur du bouclier, le moyen de clipsage pour opérer la désactivation de la fixation de l'enjoliveur, soit de venir actionner le moyen de clipsage dans le même but mais depuis le côté extérieur du bouclier à l'aide obligatoirement d'un outil qu'il convient d'insérer dans le jeu fonctionnel entre le bouclier et l'enjoliveur. Cette dernière possibilité ne donne pas satisfaction à l'usage car le démontage ne peut donc se faire sans outil, l'actionnement du moyen de clipsage en vue de sa désactivation est délicate en raison du fait que le moyen de clipsage est caché, et elle présente des risques élevés de détérioration, voire de casse, du bouclier et/ou de l'enjoliveur et/ou de la glace du dispositif d'éclairage ou de signalisation.
Le document FR 2 900 626A1, qui correspond au préambule de la revendication 1, décrit également un agencement comprenant une trappe d'accès par exemple à un projecteur antibrouillard sur un bouclier d'un véhicule, la trappe étant déplaçable entre une position d'accostage et une position d'occultation d'une fenêtre d'accès, les deux positions étant dans le même plan que la fenêtre et le passage d'une position à l'autre s'effectuant par un mouvement dans ce plan, ce mouvement étant commandé manuellement depuis un côté extérieur du bouclier.

### Objet de l'invention

Le but de la présente invention est de remédier à ces inconvénients, en proposant une solution d'accès à une ampoule d'un dispositif d'éclairage ou de signalisation de véhicule automobile qui permette d'améliorer la facilité d'accès tout en diminuant les risques de détérioration ou de casse d'un élément de la solution.

L'invention porte sur un agencement présentant les caractéristiques de la revendication 1. L'accès à l'ampoule est ainsi rendu possible depuis l'extérieur du véhicule, sans démontage du dispositif d'éclairage ou de signalisation, et sans démontage d'autre élément volumineux tel que le bouclier. L'accès est rendu possible par le démontage d'une pièce de dimensions réduites, judicieusement placée au voisinage du dispositif d'éclairage ou de signalisation. Cette pièce qui peut être prévue à des fins stylistiques, comme élément de mise en valeur du dispositif d'éclairage ou de signalisation, soulignant les lignes extérieures du véhicule, se voit ainsi attribuer une seconde fonction de la façon la plus discrète. Le démontage peut avantageusement être réalisé manuellement, de façon ergonomique. La zone de préhension peut être rendue pratiquement invisible depuis l'avant du véhicule, ce qui ne dégrade aucunement le style extérieur du véhicule.

Selon d'autres caractéristiques avantageuses de l'invention :
- le moyen de clipsage est situé d'un côté intérieur du bouclier lorsque l'enjoliveur est fixé sur le bouclier.
- le déplacement manuel commandant la désactivation de la fixation consiste en un pivotement de l'enjoliveur autour d'un axe localement inclus ou parallèle au plan tangent au bouclier.
- le pivotement est prévu sur une course angulaire comprise entre 10 et 60 degrés, notamment entre 20 et 40 degrés, notamment de l'ordre de 30 degrés.
- l'articulation de l'enjoliveur sur le bouclier comporte au moins une patte d'enfourchement portée par l'enjoliveur et pouvant s'engager dans un organe d'accrochage correspondant prévu dans le bouclier.
- la partie de moyen de clipsage portée par l'enjoliveur comporte au moins une patte d'encliquetage destinée à s'engager et coulisser suivant une direction localement perpendiculaire au bouclier dans un orifice du bouclier pourvu d'un ergot de retenue appartenant à l'autre partie de moyen de clipsage et configuré de sorte à se bloquer dans la patte d'encliquetage en fin de course de coulissement de la patte le long de l'orifice pour inhiber ce coulissement et assurer la fixation de l'enjoliveur sur le bouclier.
- l'ergot de retenue comporte une zone élastiquement flexible configurée de sorte que le blocage de l'ergot de retenue dans la patte d'encliquetage résulte d'un retour élastique de la zone flexible vers sa configuration naturelle et que la désactivation de la fixation de l'enjoliveur sur le bouclier résulte d'une déformation suffisante de la zone flexible pour libérer l'ergot de retenue.
- l'enjoliveur et le bouclier comprennent des éléments de positionnement complémentaires distincts du moyen de clipsage et bloquant tout déplacement de l'enjoliveur par rapport au bouclier dans un plan parallèle ou sensiblement parallèle au plan tangent au bouclier au niveau de l'enjoliveur, en cas d'activation de la fixation de l'enjoliveur par le moyen de clipsage.
- l'enjoliveur comprend un élément de préhension manuelle accessible depuis le côté extérieur du bouclier en cas d'activation de la fixation de l'enjoliveur par le moyen de clipsage.
- le moyen de clipsage est configuré de sorte qu'une activation de la fixation de l'enjoliveur sur le bouclier est commandée par un déplacement manuel sans outil, depuis un côté extérieur du bouclier, de l'enjoliveur par rapport au bouclier, inversé par rapport au déplacement commandant la désactivation de la fixation.
- l'élément de préhension manuelle comporte une ouverture inscrite dans un plan sensiblement perpendiculaire au plan tangent au bouclier au niveau de l'enjoliveur, de sorte que l'introduction des doigts dans l'ouverture s'effectue suivant une direction sensiblement parallèle au plan tangent au bouclier.

Un second aspect de l'invention porte sur un véhicule automobile comprenant un agencement ayant tout ou partie des caractéristiques précédentes.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 sont des vues de face d'un exemple d'agencement selon l'invention,
- la figure 3 est une vue en coupe de l'agencement,
- les figures 4 et 5 sont des vues avant et arrière d'un exemple d'enjoliveur,
- les figures 6 et 7 sont des vues en coupe de l'agencement tel que sur les figures 1 et 2, respectivement,
- les figures 8 et 9 sont des vues de coupe de détail selon des plans de coupe (X, Z) décalés en Y à proximité de la zone A de la figure 6,
- et la figure 10 est une vue de coupe de détail selon un plan de coupe (X, Z) à proximité de la zone B de la figure 6.

### Description de modes préférentiels de l'invention

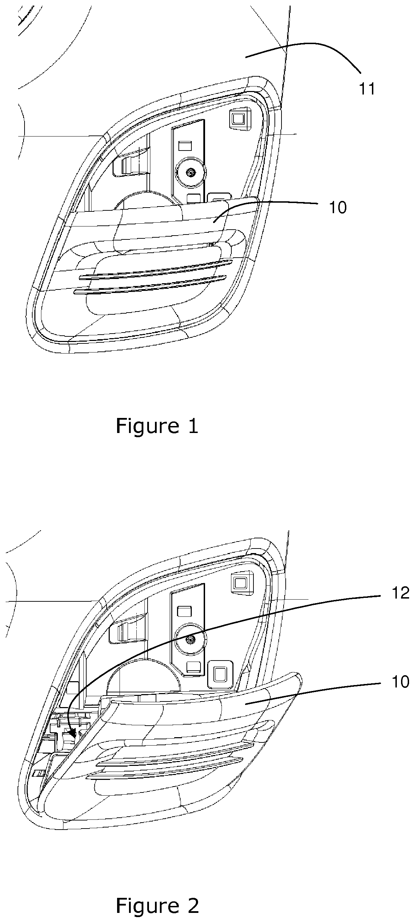

Les figures 1 et 2 représentent un agencement comprenant un enjoliveur 10 permettant un accès à une ampoule (non représentée) d'un dispositif d'éclairage ou de signalisation de véhicule automobile, et un bouclier 11 sur lequel l'enjoliveur 10 peut être monté et démonté dans une configuration adjacente à une glace du dispositif. Dans l'exemple illustré, le dispositif d'éclairage ou de signalisation est typiquement un dispositif indicateur de changement de direction. Lorsque l'enjoliveur est retiré du bouclier après une désactivation de sa fixation sur le bouclier, l'espace libéré par l'enjoliveur entre le bouclier et la glace du dispositif d'éclairage ou de signalisation donne accès à une cavité 12 fermée par l'enjoliveur 10 lorsque sa fixation sur le bouclier est activée. Cette cavité 12 est localisée au voisinage du dispositif d'éclairage ou de signalisation, de sorte à permettre un accès au système de montage du dispositif sur le véhicule et permettre une étape ultérieure de remplacement d'une ampoule dans le dispositif, en démontant ce dernier par exemple, en passant par la cavité 12 découverte par le retrait de l'enjoliveur. La désactivation de la fixation de l'enjoliveur sur le bouclier présente des particularités décrites ci-dessous.

L'enjoliveur 10 et le bouclier 11 comprennent respectivement des parties coopérant entre elles d'un moyen de clipsage assurant une fixation réversible de l'enjoliveur sur le bouclier. Une caractéristique importante repose sur le fait que ce moyen de clipsage est configuré de sorte que ses parties respectivement portées par l'enjoliveur 10 et par le bouclier 11 coopèrent l'une avec l'autre de telle manière qu'une désactivation de la fixation de l'enjoliveur 10 sur le bouclier 11 est commandée depuis un côté extérieur du bouclier 11, par un déplacement manuel, c'est-à-dire sans utilisation d'un outil, de l'enjoliveur 10 par rapport au bouclier 11, ce déplacement ayant une composante dans un plan perpendiculaire au plan tangent au bouclier 11 au niveau de l'enjoliveur 10. On entend par « plan tangent au bouclier » le plan tangent à la forme générale convexe ou bombée du bouclier au droit de l'enjoliveur. Cette notion se rapporte à une vue d'ensemble et est donc définie sans tenir compte des irrégularités locales de surface ou d'assemblage entre le bouclier et l'enjoliveur.

Le déplacement manuel commandant la désactivation de la fixation consiste en un pivotement de l'enjoliveur autour d'un axe localement inclus ou parallèle au plan tangent au bouclier. Il peut être prévu que l'axe de pivotement puisse se déplacer au cours du mouvement de pivotement.

La description d'un mode particulier de réalisation qui va suivre correspond à une application particulière de l'invention dans laquelle le dispositif d'éclairage ou de signalisation est constitué par un indicateur de direction du véhicule. Toutefois, il convient de noter que l'invention peut trouver application pour tout type de dispositif d'éclairage ou de signalisation de véhicule automobile, comme par exemple un projecteur ou un feu, notamment un projecteur ou un feu antibrouillard.

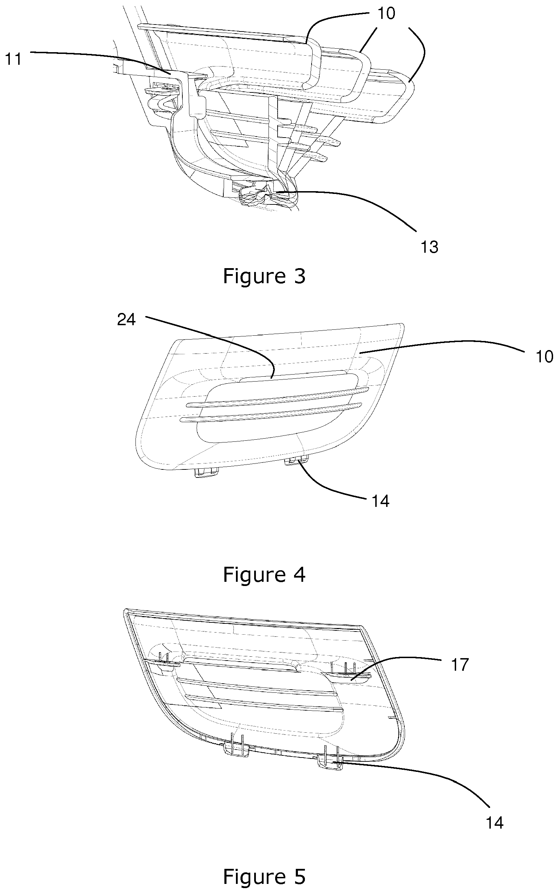

L'enjoliveur 10 est disposé d'un côté de la glace (non représentée) du dispositif d'éclairage ou de signalisation. Les termes "d'un côté de la glace" désignent une zone adjacente au bord périphérique de la glace. L'enjoliveur 10 s'étend le long d'une partie déterminée de ce bord périphérique, qui peut être plus ou moins étendue selon le mode de réalisation choisi, sans pour autant sortir du cadre de l'invention. En référence à la figure 3, l'articulation 13 de l'enjoliveur 10 sur le bouclier 11 permettant le pivotement de l'enjoliveur 10 est disposée sur un bord de l'enjoliveur 10 opposé au bord adjacent à la glace. En pivotant, l'enjoliveur varie entre la position de la figure 1 dans laquelle la fixation sur le bouclier est activée et la position de la figure 2 dans laquelle la fixation sur le bouclier est désactivée. La figure 3 illustre sur une même figure les positions des figures 1 et 2, ainsi que l'enjoliveur dans une position intermédiaire.

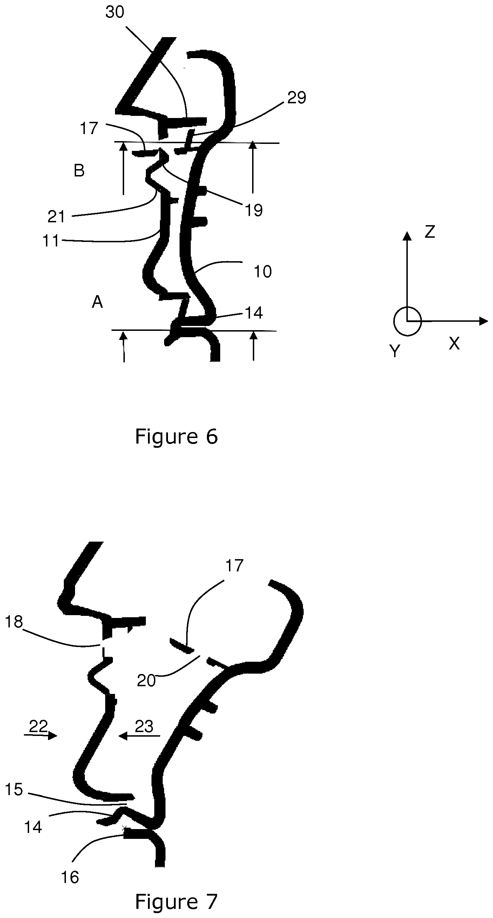

Comme illustré sur les figures 3 à 7, l'articulation 13 de l'enjoliveur 10 sur le bouclier 11 comporte au moins une patte d'enfourchement 14, par exemple au nombre de deux comme illustré, portée par l'enjoliveur 10 et pouvant s'engager dans un organe d'accrochage (encoche ou rebord) correspondant prévu dans le bouclier 11. Chacune des pattes 14 adopte une forme de crochet et est destinée à s'engager (figure 7) puis s'accrocher de manière réversible sur l'organe d'accrochage correspondant comprenant à cet effet une fente 15 d'insertion de la patte jusqu'à une position telle que le crochet des pattes 14 s'agrippe automatiquement sur un bec 16 de l'organe d'accrochage au moment du pivotement ultérieur de l'enjoliveur vers la position de la figure 1. Les pattes 14 s'étendent de manière sensiblement perpendiculaire à l'orientation générale de l'enjoliveur.

La partie de moyen de clipsage portée par l'enjoliveur 10 comporte au moins une patte d'encliquetage 17 s'étendant suivant une direction sensiblement perpendiculaire à l'orientation générale de l'enjoliveur. Dans l'exemple illustré, la partie de moyen de clipsage comprend deux pattes destinées à s'engager et coulisser suivant une direction X localement perpendiculaire au bouclier 11 dans un orifice 18 du bouclier 11 pourvu d'un ergot de retenue 19 appartenant à l'autre partie de moyen de clipsage. Le coulissement des pattes 17 selon la direction X est concomitant au passage d'une position à l'autre de l'enjoliveur par pivotement. Chaque ergot 19 est configuré de sorte à se bloquer dans une encoche 20 de la patte d'encliquetage 17 correspondante en fin de course de coulissement selon X de la patte 17 le long de l'orifice 18. Cet engagement des ergots 19 dans les encoches 20, représenté sur la figure 6, a pour effet d'inhiber la possibilité de coulissement libre des pattes 17 et assurer la fixation de l'enjoliveur 10 sur le bouclier 11 en partie supérieure de l'enjoliveur, en complément de la fixation déjà conférée par l'articulation 13 en partie inférieure de l'enjoliveur 10. Les fentes 15 et les orifices 18 sont décalés les uns des autres dans une direction Z du bouclier, tandis que les fentes 15 sont décalées entre elles, de même que les orifices 18 entre eux, dans une direction Y perpendiculaire aux directions X et Z. Le déplacement manuel commandant la désactivation de la fixation conférée par le moyen de clipsage a donc une composante au moins selon la direction X et éventuellement selon au moins l'une des directions Y et Z.

Pour permettre un démontage de l'enjoliveur 10 par application d'un effort de traction manuelle sur celui-ci supérieur à une valeur seuil prédéfinie, chaque ergot de retenue 19 comporte une zone élastiquement flexible 21 configurée de sorte que :
- le blocage de l'ergot de retenue 19 dans la patte d'encliquetage 17 correspondante résulte d'un retour élastique de la zone flexible 21 vers sa configuration naturelle,
- et la désactivation de la fixation de l'enjoliveur 10 sur le bouclier 11 résulte d'une déformation suffisante de la zone flexible 21 pour libérer l'ergot de retenue 19 de la patte 17.

Autrement dit, c'est l'application d'un effort manuel de traction sur l'enjoliveur qui, par contact des pattes 17 ainsi entraînées contre le côté de retenue des ergots 19, provoque une déformation élastique de chacune des zones 21 par flexion au niveau d'un coude de la zone 21 suffisante depuis leur configuration naturelle pour autoriser le déplacement des pattes 17 de sorte à libérer l'ergot 19.

Ainsi, les dispositions décrites précédemment permettent que le moyen de clipsage soit situé du côté intérieur 22 du bouclier 11 lorsque l'enjoliveur 10 est fixé sur celui-ci. Sur la figure 7, le côté extérieur du bouclier 11 est quant à lui repéré par la référence 23.

Il est également compris à la lecture de ce qui précède que l'activation de la fixation de l'enjoliveur 10 sur le bouclier 11, qui correspond à une mise en position engagée des ergots 19 dans les pattes 17, est commandée par un déplacement manuel sans outil, depuis le côté extérieur 23 du bouclier 11, de l'enjoliveur 10 par rapport au bouclier 11, qui est inversé par rapport au déplacement commandant la désactivation de la fixation. Autrement dit, l'activation de la fixation de l'enjoliveur est commandée dans le présent exemple par l'application d'une poussée manuelle en X de l'enjoliveur 10, dans un sens inverse à celui commandant la désactivation de la fixation. L'enjoliveur comprend un élément de préhension manuelle 24 accessible depuis le côté extérieur 23 du bouclier 11 en cas d'activation de la fixation de l'enjoliveur 10 par le moyen de clipsage (figure 4). Cet élément de préhension manuelle est conformé sur le bord d'une ouverture ménagée dans l'enjoliveur 10, notamment dans une région centrale de celui-ci.

L'élément de préhension manuelle 24 comporte une ouverture inscrite dans un plan sensiblement perpendiculaire au plan tangent au bouclier 11 au niveau de l'enjoliveur 10, de sorte que l'introduction des doigts dans l'ouverture s'effectue suivant une direction sensiblement parallèle au plan tangent au bouclier 11. L'ouverture de l'élément de préhension est accessible par un léger renfoncement conformé dans l'enjoliveur, en entrée de l'ouverture. L'ouverture est par exemple ménagée dans un flan supérieur de ce renfoncement. Cette disposition de l'ouverture permet non seulement une bonne ergonomie pour le passage des doigts, typiquement de bas en haut, et s'avère en outre très discrète puisque l'ouverture n'est pas visible depuis l'avant du véhicule : l'ouverture est essentiellement tournée vers le sol à une faible hauteur.

Le maintien de la fixation activée par poussée de l'enjoliveur 10 et assurée par le moyen de clipsage, correspond ensuite au maintien de ce blocage relatif entre les pattes 17 et les ergots 19 engagés les uns dans les autres. La désactivation de la fixation correspond à un retrait des ergots 19 des pattes 17 tel que décrit précédemment.

En référence à la figure 7, par une conception adaptée des pattes 14 et des organes d'accrochage associés, le pivotement de l'enjoliveur 10 est prévu sur une course angulaire comprise entre 10 et 60 degrés, notamment entre 20 et 40 degrés, notamment de l'ordre de 30 degrés.

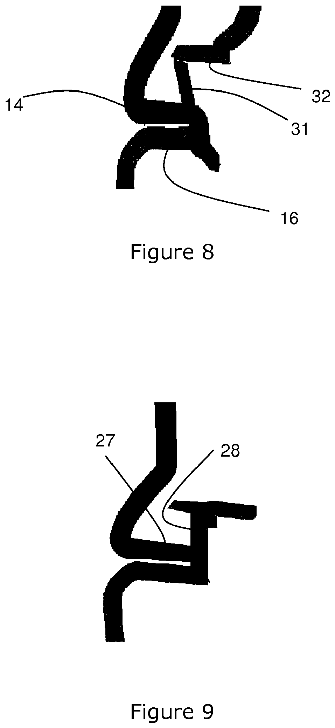

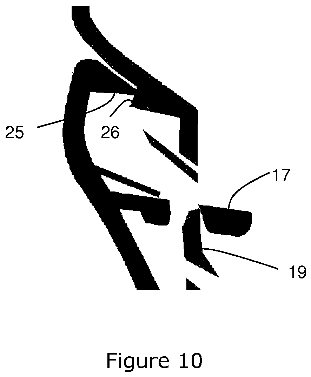

Suite à l'activation de la fixation réalisée par le moyen de clipsage, l'enjoliveur est bloqué selon la direction X dans sa partie supérieure contre des efforts de traction par le blocage entre les pattes 17 et les ergots 19 de la manière décrite précédemment et contre des efforts de poussée par un contact (section (X, Z) de la figure 10) entre un premier appui 25 porté par l'enjoliveur 10 et une première butée 26 portée par le bouclier 11. Le blocage de l'enjoliveur selon la direction X dans sa partie inférieure contre des efforts de traction est réalisé par le blocage en X des pattes 14 contre les becs 16 (figure 8), tandis qu'un contact (figure 9) entre un deuxième appui 27 porté par l'enjoliveur 10 et une deuxième butée 28 portée par le bouclier 11 assure le blocage en X de l'enjoliveur 10 contre des efforts de poussée. Les plans de coupe (X, Z) des figures 8 et 9 sont décalés dans la direction Y, de sorte que le plan de coupe de la figure 9 ne passe pas par les pattes 14.

En complément, suite à l'activation de la fixation réalisée par le moyen de clipsage, l'enjoliveur est bloqué selon la direction Z dans sa partie supérieure par le contact (figure 6) entre une première nervure 29 portée par chacune des pattes 17 et un premier arrêt 30 porté par le bouclier 11. Le blocage de l'enjoliveur selon la direction Z dans sa partie inférieure est quant à lui réalisé par le contact (figure 8) entre une deuxième nervure 31 portée par chacune des pattes 14 et un deuxième arrêt 32 porté par le bouclier 11.

Ainsi, l'enjoliveur 10 et le bouclier 11 comprennent des éléments de positionnement complémentaires 25 à 32 distincts du moyen de clipsage et bloquant tout déplacement de l'enjoliveur 10 par rapport au bouclier 11 dans un plan (X, Z) parallèle ou sensiblement parallèle au plan tangent au bouclier 11 au niveau de l'enjoliveur 10, en cas d'activation de la fixation de l'enjoliveur par le moyen de clipsage. Autrement dit ces éléments de positionnement 25 à 32 coopèrent les uns avec les autres automatiquement à la suite de l'activation de la fixation réalisée par le moyen de clipsage.

Enfin, à la suite d'un remplacement d'une ampoule d'un dispositif d'éclairage ou de signalisation de véhicule automobile utilisant un tel agencement, en commandant une désactivation de la fixation de l'enjoliveur 10 d'une manière décrite ci-dessus, il est nécessaire de commander une activation de la fixation de l'enjoliveur 10 sur le bouclier 11 selon la manière également décrite ci-dessus.

## Revendications

1. Agencement comprenant un bouclier (11) avec une glace d'un dispositif d'éclairage ou de signalisation de véhicule automobile et un enjoliveur (10) qui peut être monté et démonté sur le bouclier (11), dans une configuration adjacente à la glace du dispositif, permettant ainsi de fermer ou de donner accès à une cavité (12) localisée au voisinage du dispositif d'éclairage ou de signalisation, la cavité (12) permettant un accès à une ampoule d'un dispositif d'éclairage ou de signalisation, l'enjoliveur (10) et le bouclier (11) comprenant respectivement des parties coopérant entre elles d'un moyen de clipsage assurant une fixation de l'enjoliveur sur le bouclier, le moyen de clipsage étant configuré de sorte qu'une désactivation de la fixation de l'enjoliveur sur le bouclier est commandée depuis un côté extérieur (23) du bouclier (11) par un déplacement manuel sans outil de l'enjoliveur (10) par rapport au bouclier (11), **caractérisé en ce que** ce déplacement a une composante dans un plan perpendiculaire au plan tangent au bouclier (11) au niveau de l'enjoliveur (10), l'enjoliveur (10) étant disposé d'un côté de la glace du dispositif d'éclairage ou de signalisation, une articulation (13) de l'enjoliveur (10) sur le bouclier (11) permettant le pivotement de l'enjoliveur (10) étant disposée sur un bord de l'enjoliveur opposé au bord adjacent à la glace.

2. Agencement selon la revendication 1, **caractérisé en ce que** le moyen de clipsage est situé d'un côté intérieur du bouclier lorsque l'enjoliveur est fixé sur le bouclier.

3. Agencement selon l'une des revendications 1 et 2, **caractérisé en ce que** le déplacement manuel commandant la désactivation de la fixation consiste en un pivotement de l'enjoliveur autour d'un axe localement inclus ou parallèle au plan tangent au bouclier.

4. Agencement selon la revendication 3, **caractérisé en ce que** le pivotement est prévu sur une course angulaire comprise entre 10 et 60 degrés, notamment entre 20 et 40 degrés, notamment de l'ordre de 30 degrés.

5. Agencement selon l'une quelconque des revendications 1 à 4, **caractérisé en ce que** l'articulation de l'enjoliveur sur le bouclier comporte au moins une patte d'enfourchement (14) portée par l'enjoliveur et pouvant s'engager dans un organe d'accrochage (15, 16) correspondant prévu dans le bouclier.

6. Agencement selon l'une quelconque des revendications 1 à 5, **caractérisé en ce que** la partie de moyen de clipsage portée par l'enjoliveur comporte au moins une patte d'encliquetage (17) destinée à s'engager et coulisser suivant une direction (X) localement perpendiculaire au bouclier dans un orifice (18) du bouclier pourvu d'un ergot de retenue (19) appartenant à l'autre partie de moyen de clipsage et configuré de sorte à se bloquer dans la patte d'encliquetage en fin de course de coulissement de la patte le long de l'orifice pour inhiber ce coulissement et assurer la fixation de l'enjoliveur sur le bouclier.

7. Agencement selon la revendication 6, **caractérisé en ce que** l'ergot de retenue comporte une zone élastiquement flexible (21) configurée de sorte que le blocage de l'ergot de retenue dans la patte d'encliquetage résulte d'un retour élastique de la zone flexible vers sa configuration naturelle et que la désactivation de la fixation de l'enjoliveur sur le bouclier résulte d'une déformation suffisante de la zone flexible pour libérer l'ergot de retenue.

8. Agencement selon l'une quelconque des revendications 1 à 7, **caractérisé en ce que** l'enjoliveur et le bouclier comprennent des éléments de positionnement complémentaires (25 à 32) distincts du moyen de clipsage et bloquant tout déplacement de l'enjoliveur par rapport au bouclier dans un plan parallèle ou sensiblement parallèle au plan tangent au bouclier au niveau de l'enjoliveur, en cas d'activation de la fixation de l'enjoliveur par le moyen de clipsage.

9. Agencement selon l'une quelconque des revendications 1 à 8, **caractérisé en ce que** l'enjoliveur comprend un élément de préhension manuelle (24) accessible depuis le côté extérieur du bouclier en cas d'activation de la fixation de l'enjoliveur par le moyen de clipsage.

10. Agencement selon l'une quelconque des revendications 1 à 9, **caractérisé en ce que** le moyen de clipsage est configuré de sorte qu'une activation de la fixation de l'enjoliveur sur le bouclier est commandée par un déplacement manuel sans outil, depuis un côté extérieur du bouclier, de l'enjoliveur par rapport au bouclier, inversé par rapport au déplacement commandant la désactivation de la fixation.

11. Agencement selon la revendication 9 ou 10, **caractérisé en ce que** l'élément de préhension manuelle (24) comporte une ouverture inscrite dans un plan sensiblement perpendiculaire au plan tangent au bouclier (11) au niveau de l'enjoliveur (10), de sorte que l'introduction des doigts dans l'ouverture s'effectue suivant une direction sensiblement parallèle au plan tangent au bouclier (11).

12. Véhicule automobile, **caractérisé en ce qu'**il comprend un agencement selon l'une quelconque des revendications 1 à 11.

## Patentansprüche

1. Anordnung umfassend eine Schutzverkleidung (11) mit einer Scheibe einer Beleuchtungs- oder Signalisierungsvorrichtung eines Kraftfahrzeugs und eine Zierblende (10), die in einer Ausgestaltung, die an die Scheibe der Vorrichtung angrenzt, an der Schutzverkleidung (11) angebracht und abgenommen werden kann, wodurch ein Zugang zu einem Hohlraum (12) geschlossen oder ermöglicht wird, der sich in der Nähe der Beleuchtungs- oder Signalisierungsvorrichtung befindet, wobei der Hohlraum (12) einen Zugang zu einer Birne einer Beleuchtungs- oder Signalisierungsvorrichtung ermöglicht, wobei die Zierblende (10) und die Schutzverkleidung (11) jeweils miteinander zusammenwirkende Abschnitte eines Rastmittels umfassen, das eine Befestigung der Zierblende an der Schutzverkleidung sicherstellt, wobei das Rastmittel derart ausgestaltet ist, dass eine Deaktivierung der Befestigung der Zierblende an der Schutzverkleidung von einer Außenseite (23) der Schutzverkleidung (11) durch eine manuelle, werkzeuglose Bewegung der Zierblende (10) bezogen auf die Schutzverkleidung (11) gesteuert wird, **dadurch gekennzeichnet, dass** diese Bewegung einen Bestandteil in einer Ebene senkrecht zu der Ebene aufweist, die tangential zur Schutzverkleidung (11) an der Zierblende (10) verläuft, wobei die Zierblende (10) auf einer Seite der Scheibe der Beleuchtungs- oder Signalisierungsvorrichtung angeordnet ist, wobei ein Gelenk (13) der Zierblende (10) an der Schutzverkleidung (11), welches das Schwenken der Zierblende (10) ermöglicht, an einem Rand der Zierblende angeordnet ist, der dem Rand gegenüberliegt, der an die Scheibe angrenzt.

2. Anordnung nach Anspruch 1, **dadurch gekennzeichnet, dass** das Rastmittel auf einer Innenseite der Schutzverkleidung gelegen ist, wenn die Zierblende an der Schutzverkleidung befestigt ist.

3. Anordnung nach einem der Ansprüche 1 und 2, **dadurch gekennzeichnet, dass** die manuelle Bewegung, welche die Deaktivierung der Befestigung steuert, aus einem Schwenken der Zierblende um eine Achse besteht, die lokal in der Ebene, die tangential zur Schutzverkleidung verläuft, enthalten ist, oder parallel zu dieser verläuft.

4. Anordnung nach Anspruch 3, **dadurch gekennzeichnet, dass** das Schwenken auf einer Winkelbahn vorgesehen ist, die zwischen 10 und 60 Grad liegt, insbesondere zwischen 20 und 40 Grad, insbesondere in der Größenordnung von 30 Grad.

5. Anordnung nach einem der Ansprüche 1 bis 4, **dadurch gekennzeichnet, dass** das Gelenk der Zierblende an der Schutzverkleidung mindestens eine Klammer (14) aufweist, die von der Zierblende getragen wird, und in ein entsprechendes Verankerungselement (15, 16) eingreifen kann, das in der Schutzverkleidung vorgesehen ist.

6. Anordnung nach einem der Ansprüche 1 bis 5, **dadurch gekennzeichnet, dass** der Rastmittelabschnitt, der von der Zierblende getragen wird, mindestens einen Verriegelungsansatz (17) umfasst, der zum Eingreifen und Gleiten in eine Richtung (X), die lokal senkrecht zur Schutzverkleidung verläuft, in einer Öffnung (18) der Schutzverkleidung bestimmt ist, die mit einer Haltenase (19) versehen ist, die zum anderen Rastmittelabschnitt gehört und derart ausgestaltet ist, dass sie sich in dem Verriegelungsansatz am Ende des Gleitens des Ansatzes entlang der Öffnung festklemmt, um dieses Gleiten zu hemmen und die Befestigung der Zierblende an der Schutzverkleidung sicherzustellen.

7. Anordnung nach Anspruch 6, **dadurch gekennzeichnet, dass** die Haltenase einen elastisch flexiblen Bereich (21) umfasst, der derart ausgestaltet ist, dass das Festklemmen der Haltenase in dem Verriegelungsansatz das Ergebnis einer elastischen Rückstellung des flexiblen Bereichs hin zu seiner natürlichen Beschaffenheit ist, und dass die Deaktivierung der Befestigung der Zierblende an der Schutzverkleidung das Ergebnis einer ausreichenden Verformung des flexiblen Bereichs ist, um die Haltenase freizugeben.

8. Anordnung nach einem der Ansprüche 1 bis 7, **dadurch gekennzeichnet, dass** die Zierblende und die Schutzverkleidung ergänzende Positionnierungselemente (25 bis 32) umfassen, die von dem Rastmittel getrennt sind und im Fall einer Aktivierung der Befestigung der Zierblende durch das Rastmittel jegliche Bewegung der Zierblende bezogen auf die Schutzverkleidung in einer Ebene blockieren, die parallel oder im Wesentlichen parallel zur Ebene verläuft, die tangential zur Schutzverkleidung an der Zierblende verläuft.

9. Anordnung nach einem der Ansprüche 1 bis 8, **dadurch gekennzeichnet, dass** die Zierblende ein Element zum manuellen Greifen (24) umfasst, das im Fall einer Aktivierung der Befestigung der Zierblende durch das Rastmittel von der Außenseite der Schutzverkleidung zugänglich ist.

10. Anordnung nach einem der Ansprüche 1 bis 9, **dadurch gekennzeichnet, dass** das Rastmittel derart ausgestaltet ist, dass eine Aktivierung der Befestigung der Zierblende an der Schutzverkleidung von einer manuellen, werkzeuglosen Bewegung der Zierblende bezogen auf die Schutzverkleidung von einer Außenseite der Schutzverkleidung gesteuert wird, die bezogen auf die Bewegung, welche die Deaktivierung der Befestigung steuert, umgekehrt ist.

11. Anordnung nach Anspruch 9 oder 10, **dadurch gekennzeichnet, dass** das Element zum manuellen Greifen (24) eine Öffnung umfasst, die in einer Ebene liegt, die im Wesentlichen senkrecht zu der Ebene verläuft, die tangential zur Schutzverkleidung (11) an der Zierblende (10) verläuft, so dass die Einführung der Finger in die Öffnung in einer Richtung erfolgt, die im Wesentlichen parallel zu der Ebene verläuft, die tangential zur Schutzverkleidung (11) verläuft.

12. Kraftfahrzeug, **dadurch gekennzeichnet, dass** es eine Anordnung nach einem der Ansprüche 1 bis 11 umfasst.

## Claims

1. Arrangement comprising a front apron (11) with a lens of a lighting or signalling device of a motor vehicle and a trim element (10) which can be mounted on and removed from the front apron (11), in a configuration adjacent to the lens of the device, thereby making it possible to close off or provide access to a cavity (12) located in the vicinity of the lighting or signalling device, the cavity (12) allowing access to a bulb of a lighting or signalling device, the trim element (10) and the front apron (11) respectively comprising mutually cooperating parts of a clip-fastening means for fastening the trim element to the front apron, the clip-fastening means being configured such that the fastening of the trim element to the front apron is undone from an outer side (23) of the front apron (11) by the trim element (10) being moved manually, without tools, with respect to the front apron (11), **characterized in that** this movement has a component in a plane perpendicular to the plane tangent to the front apron (11) at the trim element (10), the trim element (10) being disposed on one side of the lens of the lighting or signalling device, a hinge (13) of the trim element (10) on the front apron (11) allowing the trim element (10) to be pivoted being disposed on an opposite edge of the trim element from the edge adjacent to the lens.

2. Arrangement according to Claim 1, **characterized in that** the clip-fastening means is situated on an inner side of the front apron when the trim element is fastened to the front apron.

3. Arrangement according to either of Claims 1 and 2, **characterized in that** the manual movement for undoing the fastening consists in pivoting of the trim element about an axis locally included in or parallel to the plane tangent to the front apron.

4. Arrangement according to Claim 3, **characterized in that** the pivoting is provided through an angular travel of between 10 and 60 degrees, notably between 20 and 40 degrees, notably around 30 degrees.

5. Arrangement according to any one of Claims 1 to 4, **characterized in that** the hinge of the trim element on the front apron has at least one notched tab (14) that is carried by the trim element and is able to engage with a corresponding coupling member (15, 16) provided in the front apron.

6. Arrangement according to any one of Claims 1 to 5, **characterized in that** the part of the clip-fastening means that is carried by the trim element has at least one snap-fastening tab (17) intended to engage and slide in a direction (X) locally perpendicular to the front apron in an orifice (18) of the front apron provided with a retaining lug (19) that belongs to the other part of the clip-fastening means and is configured so as to be locked in the snap-fastening tab at the end of sliding travel of the tab along the orifice in order to prevent this sliding and to ensure that the trim element is fastened to the front apron.

7. Arrangement according to Claim 6, **characterized in that** the retaining lug has an elastically flexible zone (21) configured such that the locking of the retaining lug in the snap-fastening tab results from an elastic return of the flexible zone into its natural configuration and that the undoing of the fastening of the trim element to the front apron results from sufficient deformation of the flexible zone to release the retaining lug.

8. Arrangement according to any one of Claims 1 to 7, **characterized in that** the trim element and the front apron comprise complementary positioning elements (25 to 32) that are separate from the clip-fastening means and prevent any movement of the trim element with respect to the front apron in a plane parallel or substantially parallel to the plane tangent to the front apron at the trim element, if the trim element is fastened by the clip-fastening means.

9. Arrangement according to any one of Claims 1 to 8, **characterized in that** the trim element comprises a manual gripping element (24) that is accessible from the outer side of the front apron in the event of the trim element being fastened by the clip-fastening means.

10. Arrangement according to any one of Claims 1 to 9, **characterized in that** the clip-fastening means is configured such that the trim element is fastened to the front apron by the trim element being moved manually, without tools, from an outer side of the front apron, with respect to the front element, in a reverse movement to the movement for undoing the fastening.

11. Arrangement according to Claim 9 or 10, **characterized in that** the manual gripping element (24) has an opening inscribed in a plane substantially perpendicular to the plane tangent to the front apron (11) at the trim element (10), such that the fingers are introduced into the opening in a direction substantially parallel to the plane tangent to the front apron (11).

12. Motor vehicle, **characterized in that** it comprises an arrangement according to any one of Claims 1 to 11.
